# EUROPEAN PATENT SPECIFICATION

(11) **EP 2 662 968 B1**
(45) Date of publication and mention of the grant of the patent: **01.07.2020**
(21) Application number: 12820843.6
(22) Date of filing: 02.11.2012
(51) Int. Cl.: H02M 7/487

(54) **THREE-LEVEL INVERTER**
DREISTUFIGER UMRICHTER
ONDULEUR À TROIS NIVEAUX

(30) Priority: 13.03.2012 CN 201210064746
(43) Date of publication of application: 13.11.2013
(73) Proprietor: Huawei Technologies Co., Ltd., Longgang District Shenzhen, Guangdong 518129 (CN)
(72) Inventor: HE, Bo, Shenzhen, Guangdong 518129 (CN)
(74) Representative: Maiwald Patent- und Rechtsanwaltsgesellschaft mbH
(86) International application number: PCT/CN2012/083950
(87) International publication number: WO 2013/135057

(56) References cited:
- WO-A2-2010/113002
- CN-A- 1 336 715
- CN-A- 102 611 342
- DE-A1-102009 039 195
- JP-A- 2002 223 573
- US-A1- 2011 013 438
- US-A1- 2011 193 412
- US-B1- 6 838 925
- US-B1- 6 838 925
- FRISCH MICHAEL ET AL: "High Efficient Topologies for Next Generation Solar Inverter", INTERNET CITATION, 31 July 2008 (2008-07-31), pages 1-6, XP002571175, Retrieved from the Internet: URL:http://download.vincotech.com/power/do cumentsection/AN80717HighEfficientInverter Topologies.pdf [retrieved on 2010-03-02]

## Description

### FIELD OF THE INVENTION

The present invention relates to the field of power electronics technologies, and in particular, to a tri-level inverter.

### BACKGROUND OF THE INVENTION

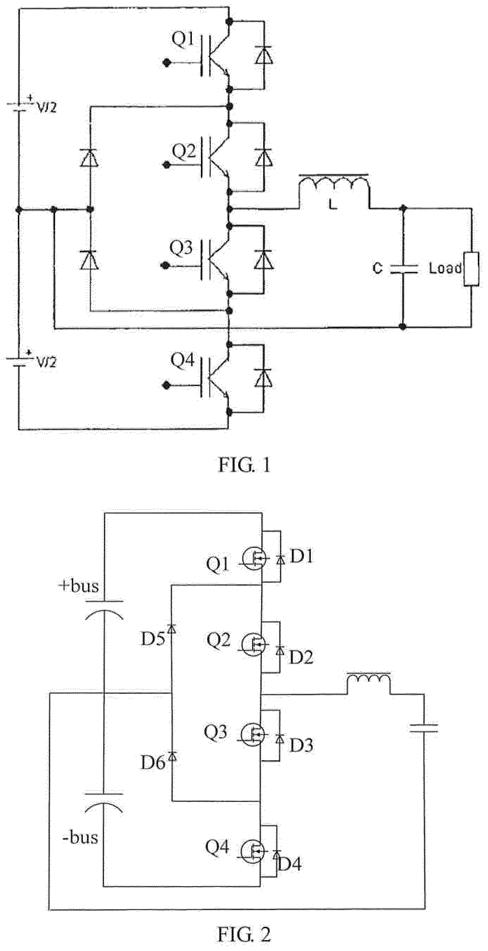

A tri-level inverter is a pulse width modulation (Pulse Width Modulation, PWM) circuit based on three fixed levels and is widely applied in the field of power electronics. Currently, as shown in FIG. 1, in a most widely applied tri-level inverter, insulated gate bipolar transistors (IGBT) are adopted as four switch tubes Q1, Q2, Q3, and Q4. However, because the IGBT has disadvantages of a low switching speed and a large loss, improvement of a PWM switching frequency is restricted. As shown in FIG. 2, in tri-level inverters of some manufacturers, metal-oxide-semiconductor field-effect transistors (MOSFET) are adopted as the four switch tubes Q1, Q2, Q3, and Q4. However, because a parasitic diode inside the MOSFET has a poor reverse recovery characteristic, when a current freewheels through the parasitic diode, a relevant electrical problem is caused, thereby influencing the reliability of the product. Frisch Michael et al.: "High Efficient Topologies for Next Generation Solar Inverter" describes design goals for solar inverters.

US 2011/0013438 A1 describes power electronics switching circuits, namely inverter modules employing two or more controlled switches that can be used with reactive loads. An inverter circuit comprises first and second input terminals for being connected to a DC power source, outputting terminals for outputting an AC voltage and at least one metal oxide semiconductor field effect transistor having a parasitic body diode.

US 2011/0193412 A1 describes a converter to supply an AC voltage on a modulated signal output comprising two switching units each provided with a DC voltage input and a switching output to supply pulses varying between the voltage on the input in a first switched state. Further, an uninterrupted power supply with such a converter is described.

US 2012/206 948 A1 discloses an inverter arrangement with four switching tubes and a modulation scheme that alternates between unipolar and complementary modulation of the switching tubes. This is meant to eliminate disturbances at the zero crossing of the output current, while at the same time reducing energy losses.

US 6,838,925 B1 discloses a three-level inverter containing both bipolar and field effect transistors, as well as a modulation scheme whereby transistors are modulated differently for each quadrant of the output voltage-current phase. This allows efficient switching of field effect transistors without additional free-wheeling and series diodes.

### SUMMARY OF THE INVENTION

An embodiment of the present invention provides a tri-level inverter, which has a fast switching speed and a small loss and avoids a relevant electrical problem caused by a poor reverse recovery characteristic of a parasitic diode inside an MOSFET.

To solve the above technical problems, the embodiment of the present invention adopts the following technical solution:

A method to operate tri-level inverter is provided, wherein the three-level inverter includes:
a first direct current source;
a second direct current source, where a positive terminal thereof and a negative terminal of the first direct current source are connected so as to be used as a first node;
a first switch tube, where the first switch tube is a field effect transistor, and a drain thereof and a positive terminal of the first direct current source are connected so as to be used as a second node;
a second switch tube, where the second switch tube is a bipolar transistor, and a collector thereof and a source of the first switch tube are connected so as to be used as a third node;
a third switch tube, where the third switch tube is a bipolar transistor, and a collector thereof and an emitter of the second switch tube are connected so as to be used as a fourth node;
a fourth switch tube, where the fourth switch tube is a field effect transistor, a drain thereof and an emitter of the third switch tube are connected so as to be used as a fifth node, and a source of the fourth switch tube and a negative terminal of the second direct current source are connected so as to be used as a sixth node;
a first diode, where a cathode thereof is connected to the drain of the first switch tube, and an anode thereof is connected to the source of the first switch tube;
a second diode, where a cathode thereof is connected to the drain of the fourth switch tube, and an anode thereof is connected to the source of the fourth switch tube;
a third diode, where an anode thereof is connected to the first node, and a cathode thereof is connected to the third node;
a fourth diode, where an anode thereof is connected to the fifth node, and a cathode thereof is connected to the first node;
a fifth diode, where an anode thereof is connected to the fourth node, and a cathode thereof is connected to the second node;
a sixth diode, where an anode thereof is connected to the sixth node, and a cathode thereof is connected to the fourth node; and
a filter unit, where two ends of the filter unit are connected to the first node and the fourth node, respectively.

The field effect transistor is an Metal-Oxide-Semiconductor Field-Effect Transistor (MOSFET) and the bipolar transistor is an Insulated Gate Bipolar Transistor (IGBT).

In a first stage, where the output voltage U and the output current I are both above zero: the second switch tube maintains an on state, the fourth switch tube maintains an off state, and the first switch tube and the third switch tube are modulated in a complementary manner, so that only the first switch tube bears a switching loss.

In a second stage, where the output voltage U is below zero and the output current I is above zero, the third switch tube maintains an on state, the first switch tube maintains an off state, and the second switch tube and the fourth switch tube are modulated in a complementary manner.

In a third stage, where the output voltage U and the output current I are both below zero, the third switch tube maintains an on state, the first switch tube maintains an off state, and the second switch tube and the fourth switch tube are modulated in a complementary manner, so that only the fourth switch tube bears the switching loss.

In a fourth stage, where the output voltage U is above zero and the output current I is below zero, the second switch tube maintains an on state, the fourth switch tube maintains an off state, and the first switch tube and the third switch tube are modulated in a complementary manner.

### BRIEF DESCRIPTION OF THE DRAWINGS

To describe the technical solutions in the embodiments of the present invention or in the prior art more clearly, the following briefly introduces the accompanying drawings needed for describing the embodiments or the prior art. Apparently, the accompanying drawings in the following descriptions show merely some embodiments of the present invention, and persons of ordinary skill in the art may still derive other drawings from the accompanying drawings without creative efforts.
FIG. 1 is a schematic diagram of a tri-level inverter in the prior art;
FIG. 2 is a schematic diagram of another tri-level inverter in the prior art;
FIG. 3 is a schematic diagram of a tri-level inverter in an embodiment of the present invention;
FIG. 4 is a schematic wave diagram of an output voltage and a current in four stages of a working process of a tri-level inverter in an embodiment of the present invention;
FIG. 5 is a schematic diagram of flow directions of a current in a third state in an embodiment of the present invention;
FIG. 6 is a schematic diagram of flow directions of a current in a fourth state in an embodiment of the present invention;
FIG. 7 is a schematic diagram of another tri-level inverter in an embodiment of the present invention; and
FIG. 8 is a schematic diagram of yet another tri-level inverter in an embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

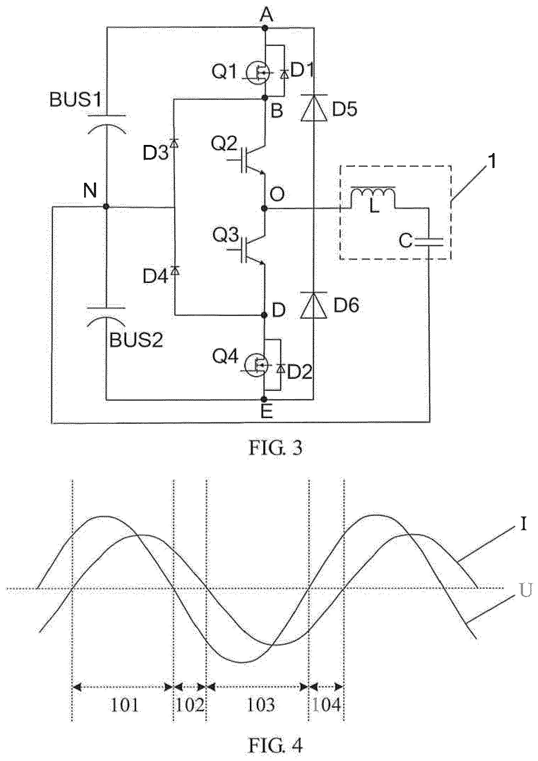

As shown in FIG. 3, an embodiment of the present invention provides a tri-level inverter, which includes: a first direct current source BUS1, a second direct current source BUS2, a first switch tube Q1, a second switch tube Q2, a third switch tube Q3, a fourth switch tube Q4, a first diode D1, a second diode D2, a third diode D3, a fourth diode D4, a fifth diode D5, a sixth diode D6, and a filter unit 1.

A positive terminal of the second direct current source BUS2 and a negative terminal of the first direct current source BUS1 are connected so as to be used as a first node N. The first switch tube Q1 is a field effect transistor, and a drain thereof and a positive terminal of the first direct current source BUS1 are connected so as to be used as a second node A. The second switch tube Q2 is a bipolar transistor, and a collector thereof and a source of the first switch tube Q1 are connected so as to be used as a third node B. The third switch tube Q3 is a bipolar transistor, and a collector thereof and an emitter of the second switch tube Q2 are connected so as to be used as a fourth node O. The fourth switch tube Q4 is a field effect transistor, a drain thereof and an emitter of the third switch tube Q3 are connected so as to be used as a fifth node D, and a source of the fourth switch tube Q4 and a negative terminal of the second direct current source BUS2 are connected so as to be used as a sixth node E. A cathode of the first diode D1 is connected to the drain of the first switch tube Q1, and an anode of the first diode D1 is connected to the source of the first switch tube Q1. A cathode of the second diode D2 is connected to the drain of the fourth switch tube Q4, and an anode of the second diode D2 is connected to the source of the fourth switch tube Q4. An anode of the third diode D3 is connected to the first node N, and a cathode of the third diode D3 is connected to the third node B. An anode of the fourth diode D4 is connected to the fifth node D, and a cathode of the fourth diode D4 is connected to the first node N. An anode of the fifth diode D5 is connected to the fourth node O, and a cathode of the fifth diode D5 is connected to the second node A. An anode of the sixth diode D6 is connected to the sixth node E, and a cathode of the sixth diode D6 is connected to the fourth node O. Two ends of the filter unit 1 are connected to the first node N and the fourth node O, respectively. The second switch tube Q2 and the third switch tube Q3 have no built-in diode, and the first diode D1 and the second diode D2 are parasitic diodes of the first switch tube Q1 and the fourth switch tube Q4, respectively.

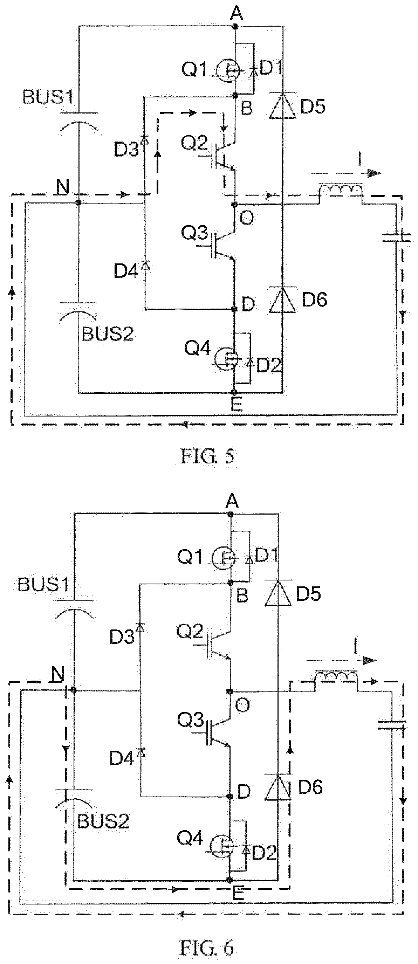

The embodiment of the present invention is further illustrated by using a working process of the tri-level inverter. The working process of the tri-level inverter includes four stages shown in FIG. 4 and eight states. The four stages are determined according to positive and negative situations of an output voltage U and an output current I, and the eight states are determined according to on and off situations of the switch tubes. Each stage is a switching process between two states. In a first stage 101, the output voltage U is a positive value, and the output current I is also a positive value. In a first state, the first switch tube Q1 and the second switch tube Q2 are turned on, the third switch tube Q3 and the fourth switch tube Q4 are turned off, and the current I flows from the positive terminal of the first direct current source BUS1 and successively through the first switch tube Q1 and the second switch tube Q2 to reach the fourth node O. In a second state, the second switch tube Q2 and the third switch tube Q3 are turned on, the first switch tube Q1 and the fourth switch tube Q4 are turned off, and the current flows from the first node N and successively through the third diode D3 and the second switch tube Q2 to reach the fourth node O. In the first stage 101, the tri-level inverter switches between the first state and the second state. That is, the second switch tube Q2 maintains an on state, the fourth switch tube Q4 maintains an off state, and the first switch tube Q1 and the third switch tube Q3 are turned on in a complementary manner, so that only the first switch tube Q1 bears a switching loss. In a second stage 102, the output voltage U is a negative value, and the output current I is a positive value. In a third state, the second switch tube Q2 and the third switch tube Q3 are turned on, the first switch tube Q1 and the fourth switch tube Q4 are turned off, and as shown in FIG. 5, the current I freewheels from the first node N and successively through the third diode D3 and the second switch tube Q2 to reach the fourth node O. In a fourth state, the third switch tube Q3 and the fourth switch tube Q4 are turned on, the first switch tube Q1 and the second switch tube Q2 are turned off, and as shown in FIG. 6, the current I freewheels from the negative terminal of the second direct current source BUS2 and through the sixth diode D6 to reach the fourth node O. Because the third switch tube Q3 has no built-in diode, and a bipolar transistor is a unilateral conduction component, the current I does not go through the second diode D2, thereby avoiding a relevant electrical problem caused because a parasitic diode inside a field effect transistor is needed for current freewheeling when the field effect transistor is used as the third switch tube Q3 in the prior art. In the second stage 102, the tri-level inverter switches between the third state and the fourth state. That is, the third switch tube Q3 maintains an on state, the first switch tube Q1 maintains an off state, and the second switch tube Q2 and the fourth switch tube Q4 are turned on in a complementary manner. In a third stage 103, the output voltage U is a negative value, and the output current I is also a negative value. In a fifth state, the second switch tube Q2 and the third switch tube Q3 are turned on, the first switch tube Q1 and the fourth switch tube Q4 are turned off, and the current I flows from the fourth node O and successively through the third switch tube Q3 and the fourth diode D4 to reach the first node N. In a sixth state, the third switch tube Q3 and the fourth switch tube Q4 are turned on, the first switch tube Q1 and the second switch tube Q2 are turned off, and the current I flows from the fourth node O and successively through the third switch tube Q3 and the fourth switch tube Q4 to reach the negative terminal of the second direct current source BUS2. In the third stage 103, the tri-level inverter switches between the fifth state and the sixth state. That is, the third switch tube Q3 maintains an on state, the first switch tube Q1 maintains an off state, and the second switch tube Q2 and the fourth switch tube Q4 are turned on in a complementary manner, so that only the fourth switch tube Q4 bears the switching loss. In a fourth stage 104, the output voltage U is a positive value, and the output current I is a negative value. In a seventh state, the second switch tube Q2 and the third switch tube Q3 are turned on, the first switch tube Q1 and the fourth switch tube Q4 are turned off, and the current I flows from the fourth node O and successively through the third switch tube Q3 and the fourth diode D4 to reach the first node N. In an eighth state, the first switch tube Q1 and the second switch tube Q2 are turned on, the third switch tube Q3 and the fourth switch tube Q4 are turned off, and the current I flows from the fourth node O and through the fifth diode D5 to reach the positive terminal of the first direct current source BUS1. A freewheeling process of the current in the eighth state is similar to that in the fourth state, which avoids the relevant electrical problem caused because a parasitic diode inside a field effect transistor is needed for current freewheeling when the field effect transistor is used as the second switch tube Q2 in the prior art. In the fourth stage 104, the tri-level inverter switches between the seventh state and the eighth state. That is, the second switch tube Q2 maintains an on state, the fourth switch tube Q4 maintains an off state, and the first switch tube Q1 and the third switch tube Q3 are turned on in a complementary manner. It should be noted that the arrows in FIG. 5 and FIG. 6 indicate directions of the current I and the fourth node O is an output end.

The tri-level inverter works in the first stage 101 and the third stage 103 in most time. Therefore, it may be known from the above description that the first switch tube Q1 and the fourth switch tube Q4 bear the main switching loss. In the tri-level inverter provided by the embodiment of the present invention, because the first switch tube Q1 and the fourth switch tube Q4 are field effect transistors, that is, the field effect transistors are used to bear the main switching loss, the switching speed is improved, and the switching loss is reduced. Meanwhile, because the second switch tube Q2 and the third switch tube Q3 are bipolar transistors and the fifth diode D5 and the sixth diode D6 are added, the current does not freewheel through the parasitic diode inside the field effect transistor, thereby avoiding a relevant electrical problem caused by a poor reverse recovery characteristic of the parasitic diode inside the field effect transistor.

Specifically, the field effect transistors may be MOSFETs, and the bipolar transistors may be IGBTs. The filter unit 1 includes an inductor L and a capacitor C, where an end of the inductor L is connected to the fourth node O, an end of the capacitor C is connected to another end of the inductor L, and another end of the capacitor C is connected to the first node N.

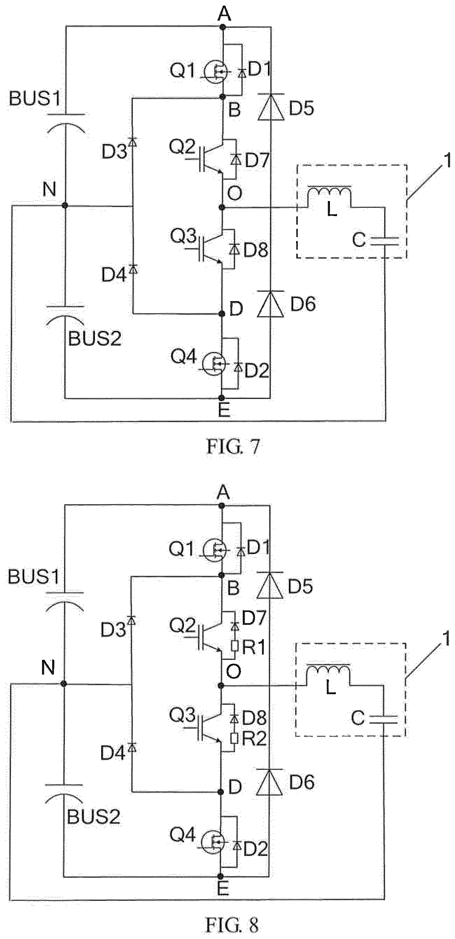

Further, as shown in FIG. 7, the tri-level inverter also includes: a seventh diode D7, where an anode thereof is connected to the emitter of the second switch tube Q2, and a cathode thereof is connected to the collector of the second switch tube Q2; and an eighth diode D8, where an anode thereof is connected to the emitter of the third switch tube Q3, and a cathode thereof is connected to the collector of the third switch tube Q3. An on-voltage drop of the fifth diode D5 is less than a sum of on-voltage drops of the first diode D1 and the seventh diode D7. An on-voltage drop of the sixth diode D6 is less than a sum of on-voltage drops of the eighth diode D8 and the second diode D2. The seventh diode D7 and the eighth diode D8 are used as anti-parallel diodes of the second switch tube Q2 and the third switch tube Q3, so as to protect the IGBTs from being broken down by a reverse voltage.

A specific working process is the same as that in the above embodiment, which is not described here again. In the fourth state and the eighth state, the seventh diode D7 and the eighth diode D8 are added, but because the seventh diode D7 and the eighth diode D8 of large on-voltage drops are selected, the on-voltage drop of the fifth diode D5 is less than the sum of the on-voltage drops of the first diode D1 and the seventh diode D7, and the on-voltage drop of the sixth diode D6 is less than the sum of the on-voltage drops of the eighth diode D8 and the second diode D2. Therefore, likewise, the current only freewheels through the fifth diode D5 and the sixth diode D6 and does not flow through the first diode D1 and the second diode D2.

In the tri-level inverter provided by the embodiment of the present invention, because the first switch tube Q1 and the fourth switch tube Q4 are MOSFETs, that is, the MOSFETs are used to bear the main switching loss, the switching speed is improved and the switching loss is reduced. Meanwhile, because the IGBTs are used as the second switch tube Q2 and the third switch tube Q3 and the fifth diode D5 and the sixth diode D6 are added, the current does not freewheel through a parasitic diode inside the MOSFET, thereby avoiding a relevant electrical problem caused by a poor reverse recovery characteristic of the parasitic diode inside the MOSFET.

Further, as shown in FIG. 8, the tri-level inverter also includes: a first resistance unit R1, where the first resistance unit R1 is connected between the anode of the seventh diode D7 and the emitter of the second switch tube Q2, or the first resistance unit R1 is connected between the cathode of the seventh diode D7 and the collector of the second switch tube Q2; and a second resistance unit R2, where the second resistance unit R2 is connected between the anode of the eighth diode D8 and the emitter of the third switch tube Q3, or the second resistance unit R2 is connected between the cathode of the eighth diode D8 and the collector of the third switch tube Q3. The first resistance unit R1 and the second resistance unit R2 may be resistors or voltage regulator tubes.

A specific working process is the same as that in the above embodiment, which is not described here again. In the fourth state and the eighth state, the seventh diode D7 and the eighth diode D8 do not need to be selected according to magnitudes of the on-voltage drops, and only the first resistance unit R1 and the second resistance unit R2 need to be added, so that the current freewheels through the fifth diode D5 and the sixth diode D6 only and does not flow through the first diode D1 and the second diode D2.

In the tri-level inverter provided by the embodiment of the present invention, because the first switch tube Q1 and the fourth switch tube Q4 are MOSFETs, that is, the MOSFETs are used to bear the main switching loss, the switching speed is improved, and the switching loss is reduced. Meanwhile, because the IGBTs are used as the second switch tube Q2 and the third switch tube Q3 and the fifth diode D5 and the sixth diode D6 are added, the current does not freewheel through the parasitic diode inside the MOSFET, thereby avoiding the relevant electrical problem caused by the poor reverse recovery characteristic of the parasitic diode inside the MOSFET.

Through the foregoing description of the embodiments, it is clear to persons skilled in the art that the present invention may be implemented by software plus necessary general hardware, and definitely may also be implemented by hardware, but in many cases, the software implementation is preferred. Based on such an understanding, the technical solutions of the present invention essentially, or the part contributing to the prior art may be implemented in the form of a software product. The computer software product is stored in a readable storage medium, for example, a floppy disk, a hard disk, or an optical disk of the computer, and includes several instructions for instructing a computer device (which may be a personal computer, a server, or a network device,) to perform the methods described in the embodiments of the present invention.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method to operate a tri-level inverter, said tri-level inverter comprising:
a first direct current source (BUS1);
a second direct current source (BUS2), wherein a positive terminal thereof and a negative terminal of the first direct current source are connected so as to be used as a first node (N);
a first switch tube (Q1), wherein the first switch tube is a field effect transistor, and a drain thereof and a positive terminal of the first direct current source are connected so as to be used as a second node (A);
a second switch tube (Q2), wherein the second switch tube is a bipolar transistor, and a collector thereof and a source of the first switch tube are connected so as to be used as a third node (B);
a third switch tube (Q3), wherein the third switch tube is a bipolar transistor, and a collector thereof and an emitter of the second switch tube are connected so as to be used as a fourth node (O);
a fourth switch tube (Q4), wherein the fourth switch tube is a field effect transistor, a drain thereof and an emitter of the third switch tube (Q3) are connected so as to be used as a fifth node (D), and a source of fourth switch tube and a negative terminal of the second direct current source are connected so as to be used as a sixth node (E);
a first diode (D1), wherein a cathode thereof is connected to the drain of the first switch tube (Q1), and an anode thereof is connected to the source of the first switch tube (Q1);
a second diode (D2), wherein a cathode thereof is connected to the drain of the fourth switch tube (Q4), and an anode thereof is connected to the source of the fourth switch tube (Q4);
a third diode (D3), wherein an anode thereof is connected to the first node (N), and a cathode thereof is connected to the third node (B);
a fourth diode (D4), wherein an anode thereof is connected to the fifth node (D), and a cathode thereof is connected to the first node (N);
a fifth diode (D5), wherein an anode thereof is connected to the fourth node (O), and a cathode thereof is connected to the second node (A);
a sixth diode (D6), wherein an anode thereof is connected to the sixth node (E), and a cathode thereof is connected to the fourth node (O); and
a filter unit (1), wherein two ends of the filter unit are connected to the first node (N) and the fourth node (O), respectively;
wherein the field effect transistor is an Metal-Oxide-Semiconductor Field-Effect Transistor (MOSFET); and
the bipolar transistor is an Insulated Gate Bipolar Transistor (IGBT);
**characterized in that**
in a first stage (101), where the output voltage U and the output current I are both above zero: the second switch tube (Q2) maintains an on state, the fourth switch tube (Q4) maintains an off state, and the first switch tube (Q1) and the third switch tube (Q3) are modulated in a complementary manner, so that only the first switch tube (Q1) bears a switching loss;
in a second stage (102), where the output voltage U is below zero and the output current I is above zero, the third switch tube (Q3) maintains an on state, the first switch tube (Q1) maintains an off state, and the second switch tube (Q2) and the fourth switch tube (Q4) are modulated in a complementary manner;
in a third stage (103), where the output voltage U and the output current I are both below zero, the third switch tube (Q3) maintains an on state, the first switch tube (Q1) maintains an off state, and the second switch tube (Q2) and the fourth switch tube (Q4) are modulated in a complementary manner, so that only the fourth switch tube (Q4) bears the switching loss; and
in a fourth stage (104), where the output voltage U is above zero and the output current I is below zero, the second switch tube (Q2) maintains an on state, the fourth switch tube (Q4) maintains an off state, and the first switch tube (Q1) and the third switch tube (Q3) are modulated in a complementary manner.

2. The method according to claim 1, wherein a tri-level inverter is chosen in which:
the filter unit comprises an inductor (L) and a capacitor (C), wherein an end of the inductor is connected to the fourth node (O), an end of the capacitor is connected to another end of the inductor, and another end of the capacitor is connected to the first node (N).

3. The method according to claim 2, wherein the tri-level inverter is chosen to further comprise:
a seventh diode (D7), wherein an anode thereof is connected to the emitter of the second switch tube (Q2), and a cathode thereof is connected to the collector of the second switch tube (Q2); and
an eighth diode (D8), wherein an anode thereof is connected to the emitter of the third switch tube (Q3), and a cathode thereof is connected to the collector of the third switch tube (Q3).

4. The method according to claim 3, wherein the tri-level inverter is chosen to further comprise: an on-voltage drop of the fifth diode (D1) is less than a sum of on-voltage drops of the first diode (D1) and the seventh diode (D7); and
an on-voltage drop of the sixth diode (D6) is less than a sum of on-voltage drops of the eighth diode (D8) and the second diode (D2).

5. The method according to claim 4, wherein the tri-level inverter is chosen to further comprise:
a first resistance unit (R1), wherein the first resistance unit is connected between the anode of the seventh diode (D7) and the emitter of the second switch tube (Q2), or the first resistance unit (R1) is connected between the cathode of the seventh diode (D7) and the collector of the second switch tube (Q2); and
a second resistance (R2) unit, wherein the second resistance unit is connected between the anode of the eighth diode (D8) and the emitter of the third switch tube (Q3), or the second resistance unit (R2) is connected between the cathode of the eighth diode (D8) and the collector of the third switch tube (Q3).

## Patentansprüche

1. Verfahren zum Betreiben eines dreistufigen Wechselrichters, wobei der dreistufige Wechselrichter Folgendes umfasst:
eine erste Gleichstromquelle (BUS1);
eine zweite Gleichstromquelle (BUS2), wobei ein positiver Anschluss davon und ein negativer Anschluss der ersten Gleichstromquelle so verbunden sind, dass dies als ein erster Knoten (N) verwendet wird;
eine erste Schaltröhre (Q1), wobei die erste Schaltröhre ein Feldeffekttransistor ist und ein Drain davon und ein positiver Anschluss der ersten Gleichstromquelle so verbunden sind, dass dies als ein zweiter Knoten (A) verwendet wird;
eine zweite Schaltröhre (Q2), wobei die zweite Schaltröhre ein Bipolartransistor ist und ein Kollektor davon und eine Source der ersten Schaltröhre so verbunden sind, dass dies als ein dritter Knoten (B) verwendet wird;
eine dritte Schaltröhre (Q3), wobei die dritte Schaltröhre ein Bipolartransistor ist und ein Kollektor davon und ein Emitter der zweiten Schaltröhre so verbunden sind, dass dies als ein vierter Knoten (O) verwendet wird;
eine vierte Schaltröhre (Q4), wobei die vierte Schaltröhre ein Feldeffekttransistor ist, ein Drain davon und ein Emitter der dritten Schaltröhre (Q3) so verbunden sind, dass dies als ein fünfter Knoten (D) verwendet wird, und eine Source der vierten Schaltröhre und ein negativer Anschluss der zweiten Gleichstromquelle so verbunden sind, dass dies als ein sechster Knoten (E) verwendet wird;
eine erste Diode (D1), wobei eine Kathode davon mit dem Drain der ersten Schaltröhre (Q1) verbunden ist und eine Anode davon mit der Source der ersten Schaltröhre (Q1) verbunden ist;
eine zweite Diode (D2), wobei eine Kathode davon mit dem Drain der vierten Schaltröhre (Q4) verbunden ist und eine Anode davon mit der Source der vierten Schaltröhre (Q4) verbunden ist;
eine dritte Diode (D3), wobei eine Kathode davon mit dem ersten Knoten (N) verbunden ist und eine Anode davon mit dem dritten Knoten (B) verbunden ist;
eine vierte Diode (D4), wobei eine Anode davon mit dem fünften Knoten (D) verbunden ist und eine Kathode davon mit dem ersten Knoten (N) verbunden ist;
eine fünfte Diode (D5), wobei eine Anode davon mit dem vierten Knoten (O) verbunden ist und eine Kathode davon mit dem zweiten Knoten (A) verbunden ist;
eine sechste Diode (D6), wobei eine Anode davon mit dem sechsten Knoten (E) verbunden ist und eine Kathode davon mit dem vierten Knoten (O) verbunden ist; und
eine Filtereinheit (1), wobei zwei Enden der Filtereinheit mit dem ersten Knoten (N) bzw. dem vierten Knoten (O) verbunden sind;
wobei der Feldeffekttransistor ein Metalloxidhalbleiter-Feldeffekttransistor (MOSFET) ist; und
der Bipolartransistor ein Bipolartransistor mit isoliertem Gate (IGBT) ist;
**dadurch gekennzeichnet, dass**
in einer ersten Stufe (101), in der sowohl die Ausgangsspannung U als auch der Ausgangsstrom I über Null liegen: die zweite Schaltröhre (Q2) einen Ein-Zustand beibehält, die vierte Schaltröhre (Q4) einen Aus-Zustand beibehält und die erste Schaltröhre (Q1) und die dritte Schaltröhre (Q3) auf eine komplementäre Art und Weise moduliert sind, sodass nur die erste Schaltröhre (Q1) einen Schaltverlust trägt;
in einer zweiten Stufe (102), in der die Ausgangsspannung U unter Null liegt und der Ausgangsstrom I über Null liegt, die dritte Schaltröhre (Q3) einen Ein-Zustand beibehält, die erste Schaltröhre (Q1) einen Aus-Zustand beibehält und die zweite Schaltröhre (Q2) und die vierte Schaltröhre (Q4) auf eine komplementäre Art und Weise moduliert sind;
in einer dritten Stufe (103), in der sowohl die Ausgangsspannung U als auch der Ausgangsstrom I unter Null liegen, die dritte Schaltröhre (Q3) einen Ein-Zustand beibehält, die erste Schaltröhre (Q1) einen Aus-Zustand beibehält und die zweite Schaltröhre (Q2) und die vierte Schaltröhre (Q4) auf eine komplementäre Art und Weise moduliert sind, sodass nur die vierte Schaltröhre (Q4) den Schaltverlust trägt; und
in einer vierten Stufe (104), in der die Ausgangsspannung U über Null liegt und der Ausgangsstrom I unter Null liegt, die zweite Schaltröhre (Q2) einen Ein-Zustand beibehält, die vierte Schaltröhre (Q4) einen Aus-Zustand beibehält und die erste Schaltröhre (Q1) und die dritte Schaltröhre (Q3) auf eine komplementäre Art und Weise moduliert sind.

2. Verfahren nach Anspruch 1, wobei ein dreistufiger Wechselrichter gewählt wird, in dem:
die Filtereinheit eine Induktivität (L) und einen Kondensator (C) umfasst, wobei ein Ende der Induktivität mit dem vierten Knoten (O) verbunden ist, ein Ende des Kondensators mit einem anderen Ende der Induktivität verbunden ist und ein anderes Ende des Kondensators mit dem ersten Knoten (N) verbunden ist.

3. Verfahren nach Anspruch 2, wobei der dreistufige Wechselrichter so gewählt wird, dass er ferner Folgendes umfasst:
eine siebte Diode (D7), wobei eine Anode davon mit dem Emitter der zweiten Schaltröhre (Q2) verbunden ist und eine Kathode davon mit dem Kollektor der zweiten Schaltröhre (Q2) verbunden ist; und
eine achte Diode (D8), wobei eine Anode davon mit dem Emitter der dritten Schaltröhre (Q3) verbunden ist und eine Kathode davon mit dem Kollektor der dritten Schaltröhre (Q3) verbunden ist.

4. Verfahren nach Anspruch 3, wobei der dreistufige Wechselrichter so gewählt wird, dass er ferner Folgendes umfasst: ein Ein-Spannungsabfall der fünften Diode (D1) ist geringer als eine Summe von Ein-Spannungsabfällen der ersten Diode (D1) und der siebten Diode (D7); und
ein Ein-Spannungsabfall der sechsten Diode (D6) ist geringer als eine Summe von Ein-Spannungsabfällen der achten Diode (D8) und der zweiten Diode (D2).

5. Verfahren nach Anspruch 4, wobei der dreistufige Wechselrichter so gewählt wird, dass er ferner Folgendes umfasst:
eine erste Widerstandseinheit (R1), wobei die erste Widerstandseinheit zwischen der Anode der siebten Diode (D7) und dem Emitter der zweiten Schaltröhre (Q2) geschaltet ist oder die erste Widerstandseinheit (R1) zwischen der Kathode der siebten Diode (D7) und dem Kollektor der zweiten Schaltröhre (Q2) geschaltet ist; und
eine zweite Widerstandseinheit (R2), wobei die zweite Widerstandseinheit zwischen der Anode der achten Diode (D8) und dem Emitter der dritten Schaltröhre (Q3) geschaltet ist oder die zweite Widerstandseinheit (R2) zwischen der Kathode der achten Diode (D8) und dem Kollektor der dritten Schaltröhre (Q3) geschaltet ist.

## Revendications

1. Procédé pour faire fonctionner un onduleur à trois niveaux, ledit onduleur à trois niveaux comprenant :
une première source de courant continu (BUS1) ;
une deuxième source de courant continu (BUS2), dans lequel une borne positive de celle-ci et une borne négative de la première source de courant continu sont connectées de manière à être utilisées en tant que premier nœud (N) ;
un premier tube de commutation (Q1), dans lequel le premier tube de commutation est un transistor à effet de champ, et un drain de celui-ci et une borne positive de la première source de courant continu sont connectés de manière à être utilisés en tant que deuxième nœud (A) ;
un deuxième tube de commutation (Q2), dans lequel le deuxième tube de commutation est un transistor bipolaire, et un collecteur de celui-ci et une source du premier tube de commutation sont connectés de manière à être utilisés en tant que troisième nœud (B) ;
un troisième tube de commutation (Q3), dans lequel le troisième tube de commutation est un transistor bipolaire, et un collecteur de celui-ci et un émetteur du deuxième tube de commutation sont connectés de manière à être utilisés en tant que quatrième nœud (O) ;
un quatrième tube de commutation (Q4), dans lequel le quatrième tube de commutation est un transistor à effet de champ, un drain de celui-ci et un émetteur du troisième tube de commutation (Q3) sont connectés de manière à être utilisés en tant que cinquième nœud (D), et une source du quatrième tube de commutation et une borne négative de la deuxième source de courant continu sont connectées de manière à être utilisées en tant que sixième nœud (E) ;
une première diode (D1), dans lequel une cathode de celle-ci est connectée au drain du premier tube de commutation (Q1), et une anode de celle-ci est connectée à la source du premier tube de commutation (Q1) ;
une deuxième diode (D2), dans lequel une cathode de celle-ci est connectée au drain du quatrième tube de commutation (Q4), et une anode de celle-ci est connectée à la source du quatrième tube de commutation (Q4) ;
une troisième diode (D3), dans lequel une anode de celle-ci est connectée au premier nœud (N), et une cathode de celle-ci est connectée au troisième nœud (B) ;
une quatrième diode (D4), dans lequel une anode de celle-ci est connectée au cinquième nœud (D), et une cathode de celle-ci est connectée au premier nœud (N) ;
une cinquième diode (D5), dans lequel une anode de celle-ci est connectée au quatrième nœud (O), et une cathode de celle-ci est connectée au deuxième nœud (A) ;
une sixième diode (D6), dans lequel une anode de celle-ci est connectée au sixième nœud (E), et une cathode de celle-ci est connectée au quatrième nœud (O) ; et
une unité de filtre (1), dans lequel deux extrémités de l'unité de filtre sont connectées au premier nœud (N) et au quatrième nœud (O), respectivement ;
dans lequel le transistor à effet de champ est un transistor à effet de champ métal-oxyde-semi-conducteur (MOSFET) ; et
le transistor bipolaire est un transistor bipolaire à grille isolée (IGBT) ;
**caractérisé en ce que**
dans une première étape (101), où la tension de sortie U et le courant de sortie I sont tous les deux au-dessus de zéro : le second tube de commutation (Q2) maintient un état passant, le quatrième tube de commutation (Q4) maintient un état bloqué, et le premier tube de commutation (Q1) et le troisième tube de commutation (Q3) sont modulés d'une manière complémentaire, de sorte que seul le premier tube de commutation (Q1) supporte une perte de commutation ;
dans une deuxième étape (102), où la tension de sortie U est inférieure à zéro et le courant de sortie I est supérieur à zéro, le troisième tube de commutation (Q3) maintient un état passant, le premier tube de commutation (Q1) maintient un état bloqué, et le deuxième tube de commutation (Q2) et le quatrième tube de commutation (Q4) sont modulés d'une manière complémentaire ;
dans une troisième étape (103), où la tension de sortie U et le courant de sortie I sont tous les deux en dessous de zéro, le troisième tube de commutation (Q3) maintient un état passant, le premier tube de commutation (Q1) maintient un état bloqué et le deuxième tube de commutation (Q2) et le quatrième tube de commutation (Q4) sont modulés d'une manière complémentaire, de sorte que seul le quatrième tube de commutation (Q4) supporte la perte de commutation ; et
dans une quatrième étape (104), où la tension de sortie U est supérieure à zéro et le courant de sortie I est inférieur à zéro, le deuxième tube de commutation (Q2) maintient un état passant, le quatrième tube de commutation (Q4) maintient un état bloqué, et le premier tube de commutation (Q1) et le troisième tube de commutation (Q3) sont modulés d'une manière complémentaire.

2. Procédé selon la revendication 1, dans lequel un onduleur à trois niveaux est choisi dans lequel :
l'unité de filtre comprend une bobine d'induction (L) et un condensateur (C), dans lequel une extrémité de la bobine d'induction est connectée au quatrième nœud (O), une extrémité du condensateur est connectée à une autre extrémité de la bobine d'induction, et une autre extrémité du condensateur est connectée au premier nœud (N).

3. Procédé selon la revendication 2, dans lequel l'onduleur à trois niveaux est choisi pour comprendre en outre :
une septième diode (D7), dans lequel une anode de celle-ci est connectée à l'émetteur du deuxième tube de commutation (Q2), et une cathode de celle-ci est connectée au collecteur du deuxième tube de commutation (Q2) ; et
une huitième diode (D8), dans lequel une anode de celle-ci est connectée à l'émetteur du troisième tube de commutation (Q3), et une cathode de celle-ci est connectée au collecteur du troisième tube de commutation (Q3).

4. Procédé selon la revendication 3, dans lequel l'onduleur à trois niveaux est choisi pour comprendre en outre :
une chute de tension à l'état passant de la cinquième diode (D1) est inférieure à une somme de chutes de tension à l'état passant de la première diode (D1) et de la septième diode (D7) ; et
une chute de tension à l'état passant de la sixième diode (D6) est inférieure à une somme de chutes de tension à l'état passant de la huitième diode (D8) et la deuxième diode (D2).

5. Procédé selon la revendication 4, dans lequel l'onduleur à trois niveaux est choisi pour comprendre en outre :
une première unité de résistance (R1), dans lequel la première unité de résistance est connectée entre l'anode de la septième diode (D7) et l'émetteur du deuxième tube de commutation (Q2), ou la première unité de résistance (R1) est connectée entre la cathode de la septième diode (D7) et le collecteur du deuxième tube de commutation (Q2) ; et
une deuxième unité de résistance (R2), dans lequel la deuxième unité de résistance est connectée entre l'anode de la huitième diode (D8) et l'émetteur du troisième tube de commutation (Q3), ou la deuxième unité de résistance (R2) est connectée entre la cathode de la huitième diode (D8) et le collecteur du troisième tube de commutation (Q3).
